**Europäisches Patentamt**

**European Patent Office**

**Office européen des brevets**

(19)

(11) Veröffentlichungsnummer: **0 012 339**

**B1**

(12) **EUROPÄISCHE PATENTSCHRIFT**

(45) Veröffentlichungstag der Patentschrift: **09.03.83**

(21) Anmeldenummer: **79104923.2**

(22) Anmeldetag: **05.12.79**

(51) Int. Cl.³: **C 09 D 3/00**, C 09 D 5/02, D 04 H 1/00

(54) **Strahlungshärtbare wässrige Bindemitteldispersionen, Verfahren zu deren Herstellung sowie deren Verwendung.**

(30) Priorität: **14.12.78 DE 2853921**

(43) Veröffentlichungstag der Anmeldung:
**25.06.80 Patentblatt 80/13**

(45) Bekanntmachung des Hinweises auf die Patenterteilung:
**09.03.83 Patentblatt 83/10**

(84) Benannte Vertragsstaaten:
**BE CH DE FR GB IT NL SE**

(56) Entgegenhaltungen:
**FR - A - 2 174 942**
**FR - A - 2 354 375**
**US - A - 4 033 920**
**US - A - 4 107 013**

**CHEMICAL ABSTRACTS, Band 84, Nr. 10, 8. März 1976, Zusammenfassung Nr. 61386m, Seite 108, Columbus, Ohio, US.**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Buethe, Ingolf, Dr., Dipl.-Chem.**
**Londoner-Ring 15**
**D-6700 Ludwigshafen (DE)**
Erfinder: **Loch, Werner, Dr., Dipl.-Chem.**
**Berner Weg 34**
**D-6700 Ludwigshafen (DE)**

## Strahlungshärtbare wäßrige Bindemitteldispersionen, Verfahren zu deren Herstellung sowie deren Verwendung

Die vorliegende Erfindung betrifft strahlungshärtbare wäßrige Bindemitteldispersionen, ihre Herstellung sowie ihre Verwendung für Überzugsmittel und zur Verstärkung von Faservliesen.

Wäßrige Systeme als umweltfreundliche Beschichtungsmittel sind hinreichend bekannt. Wegen der immer schärferen Emissionsüberwachung sowie der ständig steigenden Lösungsmittelpreise gewinnt ihr Einsatz zunehmend an Interesse. Konventionelle Wasserlacke haben jedoch den Nachteil, daß bereits bei Schichtdicken ab 30 $\mu$m Oberflächenstörungen durch Kochblasen auftreten. Eine weitere Erhöhung der Schichtdicke um nur einige Mikrometer läßt sich nur durch komplizierte Aufheizprogramme oder durch Zusatz beträchtlicher Mengen an Cosolventien (20 Gewichtsprozent und mehr) erzielen. Ersteres ist sehr zeitraubend und kostenintensiv, letzteres bedeutet eine erneute Umweltbelastung.

In der NL—A 7 507 052 werden anionische wäßrige Emulsionen beschrieben, die aus strahlungshärtbaren Lackbindemitteln durch Neutralisation von Carboxlgruppen mit Alkalilaugen, Ammoniak oder Aminen hergestellt sind. Alkaliionen bleiben jedoch im fertigen Lackfilm zurück und erniedrigen die Wasserfestigkeit; Ammoniak oder Amine können sich beim Vorheizen teilweise verflüchtigen und eine erneute Umweltbelästigung verursachen; im Lackfilm verbleibendes Amin setzt die Wasserfestigkeit herab und gibt zur Vergilbung Anlaß. Hinzukommt, daß beträchtliche Wechselwirkungen der Polysalzmolekeln untereinander vorliegen (Verdickerwirkung). Das bedingt eine Viskositätserhöhung bzw. bei gegebener Viskosität eine Erniedrigung des Feststoffgehaltes. Letzteren Mangel beobachtet man in noch viel stärkerem Maße bei kationischen wäßrigen Dispersionen, wie sie in der DE—A 26 50 782 und DE—A 27 24 087 beschrieben sind.

Aus den Patentschriften NE—A 67 149 79, BE—A 709 564 und BE—A 709 565 sind strahlungshärtbare wäßrige Emulsionspolymerisate bekannt. Emulsionspolymerisate sind jedoch auf Additionspolymere, beispielsweise Polyacrylate beschränkt, wobei sogar aus Gründen der Wasserlöslichkeit von vornherein auf bestimmte Monomere verzichtet werden muß; Emulsionspolymerisate weisen bekanntermaßen sehr hohe Molekulargewichte auf, was sich nachteilig auf Verlauf sowie erreichbare Schichtdicke auswirkt.

In der japanischen Offenlegungsschrift Nr. 133 238/75 werden Dispersionen beschrieben, die ungesättigte Polyester als strahlungshärtbares Bindemittel und anionische, kationische oder nichtionische Tenside und Schutzkolloide, wie z.B. Polyvinylalkohol oder Polyvinylalkoholderivate enthalten. Die Wasserfestigkeit der mit Polyvinylalkohol oder Polyvinylalkoholderivaten als Schutzkolloid erhaltenen Lackfilme ist jedoch ungenügend.

Aufgabe der vorliegenden Erfindung ist es, wäßrige, von flüchtigen Bestandteilen freie Bindemittel aufzuzeigen, die sich vorteilhaft herstellen und verarbeiten lassen, sich auf verschiedenen Substraten zu kocherfreien, hochglänzenden, wasserfesten, störungsfreien Überzügen sehr hoher Dicke aushärten lassen.

Eine weitere Aufgabe der vorliegenden Erfindung war es, wäßrige Beschichtungsmittel mit hohem Festkörpergehalt aufzuzeigen.

Gegenstand der vorliegenden Erfindung sind strahlungshärtbare wäßrige Bindemitteldispersionen, die dadurch gekennzeichnet sind, daß sie im wesentlichen bestehen aus

(A) 20 bis 80 Gewichtsprozent Wasser,
(B) 80 bis 20 Gewichtsprozent mindestens eines in (A) dispergierten Präpolymeren mit einem Gehalt von 0,01 bis 1,0 Mol pro 100 g Präpolymer an polymerisierbaren C—C-Doppelbindungen, einem mittleren Molekulargewicht von mindestens 350 sowie einer Viskosität bei 23°C von mindestens 600 mPa.s,

mit der Maßgabe, daß die Summe der unter (A) und (B) genannten Prozentzahlen gleich 100 ist, sowie zusätzlich

(C) 0,1 bis 30 Gewichtsprozent, bezogen auf (B), Polyvinylpyrrolidon und/oder eines Vinylpyrrolidon-Vinylester-Copolymeren mit einem Vinylestergehalt von weniger als 35 Gewichtsprozent als Dispergierhilfsmittel und
(D) 0 bis 20 Gewichtsprozent, bezogen auf (B), mindestens eines Photoinitiators.

Bevorzugt als Komponente (B) sind polymerisierbare C—C-Doppelbindungen enthaltende Polyester mit einer Säurezahl von höchstens 10, polymerisierbare C—C-Doppelbindungen enthaltende Polyäther, hydroxylgruppenhaltige Umsetzungsprodukte aus einem mindestens zwei Epoxidgruppen pro Molekül enthaltenden Polyepoxid mit mindestens einer $\alpha,\beta$-äthylenisch ungesättigten Carbonsäure, Polyurethan(meth-)acrylate sowie $\alpha,\beta$-äthylenisch ungesättigte Acylreste enthaltende Acrylcopolymere.

Gegenstand der vorliegenden Erfindung ist auch ein Verfahren zur Herstellung dieser strahlungshärtbaren wäßrigen Bindemitteldispersionen wobei, eine Lösung der Koponente (B) in einem inerten organischen Lösungsmittel oder Lösungsmittelgemisch mit einer wäßrigen Lösung der Komponente (C) gemischt und das inerte organische Lösungsmittel oder Lösungsmittelgemisch destillativ entfernt wird. Die Komponente (D) und andere Hilfs- und Zusatzstoffe können hierbei der Lösung der Komponente (B), deren Mischung mit der wäßrigen Lösung der Komponente (C) oder nach der destillativen Entfernung des inerten organischen Lösungsmittels oder Lösungsmittelgemisches zugefügt werden. Gegenstand der vorliegenden Erfindung ist außerdem die Verwendung der erfindungsgemäßen strahlungshärtbaren wäßrigen Bindemitteldispersionen für mittels UV-Strahlung oder beschleunigter Elektronen härtbare Überzugsmittel zur Beschichtung von metallischen und nichtmetallischen Substraten, wobei die Überzungsmittel gegebenenfalls zusätzlich Synergisten für die Komponente (D), Pigmente, Füllstoffe, lösliche Farbstoffe, weitere von Komponente (B) verschiedene Bindemittel und andere in der Lacktechnologie übliche Hilfsmittel enthalten, sowie ihre Verwendung zur Verstärkung von Faservliesen, wobei die Härtung des Bindemittels ebenfalls durch UV-Strahlung oder beschleunigte Elektronen erfolgt.

Die gestellte Aufgabe wird durch die erfindungsgemäßen strahlungshärtbaren nichtionischen wäßrigen Bindemitteldispersionen in sehr vorteilhafter Weise gelöst.

Die erfindungsgemäßen strahlungshärtbaren wäßrigen Bindemitteldispersionen sind praktisch frei von umweltschädigenden flüchtigen Bestandteilen, wie Monomeren oder Cosolventien. Es können damit Beschichtungen auf verschiedenen Substraten hergestellt werden, die sich mittels UV-Strahlung oder Elektronenstrahlen zu kocherfreien hochglänzenden, wasserfesten, störungsfreien Überzügen mit Schichtdicken bis über 100 $\mu$m aushärten lassen. Die Vernetzung erfolgt nach vollständiger Verdampfung des Wassers bzw. bei Spritzapplikation zusätzlich nach vollständigen Entweichen der eingeschlossenen Luft.

Zu den einzelnen Komponenten der erfindungsgemäßen strahlungsshärtbaren wäßrigen Bindmitteldispersionen ist folgendes zu sagen:

(A) Die Komponente (A) ist Wasser, das in einer Konzentration von 20 bis 80, vorzugsweise 30 bis 60 Gewichtsprozent, vorliegt.

(B) Die Komponente (B) ist ein in Wasser dispergiertes, in besonderen Fällen gelöstes, filmbildendes Präpolymeres bzw. Präpolymereingemisch mit einem Gehalt von 0,01 bis 1,0, vorzugsweise 0,04 bis 0,6 Mol pro 100 g Substanz an polymerisierbaren Doppelbindungen, einem mittleren Molekulargewicht von mindestens 350, vorzugsweise mindestens 600, sowie einer Viskosität (nach DIN-Entwurf 53 788) bei 23°C von mindestens 600, vorzugsweise 1000 mPa.s. Dieses Präpolymere kann z.B. sein:

1. Ein Polyester mit einer Säurezahl von höchstens 10 aus aliphatischen und/oder aromatischen Dicarbonsäuren, wie Bernsteinsäure, Glutarsäure, Adipinsäure, Pimelinsäure, Korksäure, Azelainsäure, Sebacinsäure, Cyclohexandicarbonsäure, Phthalsäure, Isophthalsäure, Terephthalsäure, Maleinsäure, Fumarsäure, Itakonsäure bzw. deren Derivate, und mehrwertigen Alkoholen, wie Äthylenglykol, Polyäthylenglykole, Propylenglykol, Polypropylenglykole, Butandiol, Hexandiol, Neopentylglykol, Hydoxypivalinsäureneopentylglykolester, Trimethylolpropan, Glycerin, Pentaerythrit und/oder Trishydroxyäthylisocyanurat, sowie $\alpha,\beta$-äthylenisch ungesättigten Monocarbonsäuren, beispielsweise Acrylsäure, Methacrylsäure, Crotonsäure, Zimtsäure und/oder Dicarbonsäurehalbester von Monoalkanolen, wie Malein-, Fumar- und Itakonsäurehalbester mit $C_1$- bis $C_4$-Monoalkoholen, wobei Acrylsäure und Methacrylsäure bevorzugt sind, welcher nach den üblichen Verfahren in einem Schritt oder auch stufenweise hergestellt werden kann,

2. ein aliphatischer oder araliphatischer Polyäther, welcher durch Umsetzung von zwei- und/oder mehrwertigen Alkoholen, die auch unter 1) genannt sind, mit verschiedenen Mengen an Äthylen- und/oder Propylenoxid erhalten wird und dessen freie Hydroxylgruppen ganz oder teilweise mit äthylenisch ungesättigten Alkoholen, beispielsweise Allylalkohol, Methallylalkohol, Crotylalkohol, Zimtalkohol, veräthert und/oder mit $\alpha,\beta$-äthylenisch ungesättigten Monocarbonsäuren, wie unter 1) genannt, verestert sind,

3. eine ungestättigte hydroxylgruppenhaltige Verbindung durch Umsetzung eines Polyepoxids mit durchschnittlich mindestens 2 Epoxidgruppen pro Molekül, beispielsweise Polyglycidyläther mehrwertiger Alkohole, wie sie auch unter 1) genannt sind, Polyglycidyläther mehrwertiger Phenole, wie Bisphenol A, Glycidylester mehrwertiger Carbonsäuren, wie sie auch unter 1) genannt sind, andere Glycidylverbindungen, beispielsweise Triglycidylisocyanurat, und/oder epoxidierte natürliche oder synthetische Öle, mit $\alpha,\beta$-äthylenisch ungesättigten Carbonsäuren, wie sie auch unter 1) genannt sind, hergestellt werden kann,

4. ein gegebenenfalls Harnstoffgruppen enthaltendes Polyurethan, das aus aliphatischen und/oder aromatischen Polyisocyanaten, beispielsweise Tetramethylendiisocyanat, Hexamethylendiisocyanat, Isophorondiisocyanat, Diphenylmethandiisocyanat, Tolyylendiisocyanat, Naphthylendiisocyanat, 4,4'-Diphenylätherdiisocyanat, gegebenenfalls daraus hervorgehende Di oder Trimere sowie deren Umsetzungsprodukte mit untergeordneten Mengen wasserstoffaktiver Verbindungen, wie z.B. mehrwertigen Alkoholen, die auch unter 1) genannt sind, polyfunktionellen Aminen und/oder Aminoalkoholen, durch Umsetzung mit hydroxylgruppenhaltigen (Meth-)acrylsäureestern, wie Hydroxyäthyl(meth-)acrylat, Hydroxypropyl(meth-)acrylat und/oder Butandiolmono(meth-)acrylat, hergestellt werden kann,

5. ein Polymeres, das durch Einführung von $\alpha,\beta$-äthylenisch ungesättigten Acylresten, die sich beispielsweise von den unter 1) genannten $\alpha,\beta$-äthylenisch ungesättigten Monocarbonsäuren ableiten, in durch gewöhnliche Lösungspolymerisation hergestellte Acrylatcopolymere, Styro/Acrylat-Copolymere oder dergleichen, mit einem Gehalt von mindestens 0,02 Mol Hydroxyl-, Carboxyl- und/oder Epoxygruppen pro 100 g Substanz, erhalten werden kann.

Desgleichen eignen sich auch Gemische der unter 1) bis 5) genannten Präpolymeren. Komponente (B) ist in den erfindungsgemäßen wäßrigen Bindemitteldispersionen in Mengen von 80 bis 20, vorzugsweise 70 bis 40 Gewichtsprozent, enthalten.

(C) Die Komponente (C) ist ein Dispergierhiefsmittel, das in den erfindungsgemäßen strahlungshärtbaren wäßrigen Überzugsmitteldispersionen in Mengen von 0,1 bis 30, vorzugsweise 3 bis 12 Gewichtsprozent, bezogen auf (B), enthalten ist. Dabei handelt es sich um Polyvinylpyrrolidon und/oder ein Vinylpyrrolidon-/Vinyl-ester-Copolymeres mit einem Vinylestergehalt von unter 35, insbesondere 5 bis 30 Gewichtsprozent, wobei als Vinylester insbesondere Vinylpropionat bzw. -acetat in Frage kommen.

Außerdem können nichtionische, in besonderen Fällen auch ionische Emulgatoren mitverwendet werden. Bevorzugte derartige Emulgatoren sind längerkettige Alkohole oder Phenole unterschiedlichen Äth- und/oder Propoxylierungsgrades (Addukte von 4—50 Mol Äthylenoxid und/oder Propylenoxid). Besonders vorteilhaft sind Kombinationen der oben genannten Schutzkolloide mit derartigen Emulgatoren, da mit ihnen feinteiligere Dispersionen erhalten werden.

(D) Bei der Komponente (D) handelt es sich um die bei strahlungshärtbaren Lacken üblichen Photoinitiatoren, wie z.B. Benzophenon, Benzildimethylketal, Benzoinäther, andere aromatische Ketone, Anthrachinon, Thioxanthon bzw. deren Derivate, die in den erfindungsgemäßen strahlungshätbaren wäßrigen Überzugsmitteldispersionen in Mengen von 0 bis 20, vorzugsweise 0 bis 10 Gewichtsprozent, bezogen auf (B), enthalten sind.

Wenn die erfindungsgemäßen Bindemittel mittels UV-Strahlen gehärtet werden, können auch die bei strahlungshärtbaren Lacke üblichen Synergisten für die Komponente (D), mitverwendet werden. Diese Synergisten können in den erfindungsgemäßen strahlungshärtbaren wäßrigen Bindemitteldispersionen in Mengen bis 10 Gewichtsprozent, vorzugsweise bis 5 Gewichtsprozent, bezogen auf (B), enthalten sein. Bevorzugte Synergisten sind z.B. Methyldiäthanolamin und Triäthanolamin.

Gegebenenfalls können den erfindungsgemäßen Bindemitteldispersionen auch in der Lacktechnologie übliche Pigmente und/oder Füllstoffe in Mengen bis 100 Gewichtsprozent, bezogen auf die Summe der Komponenten (B) und (C) zugefügt werden, wobei Rutil, Ruß, Talkum, Zinkoxid, Calciumcarbonat, verschiedene Eisenoxide oder organische Pigmente bevorzugt sind. Außerdem können auch andere in der Lacktechnologie übliche Hilfsstoffe, wie Verlaufmittel, Netzmittel, Entschäumer, lösliche Farbstoffe, Neutralisationsmittel, zusätzliche unter (B) nicht genannte Bindemittel, z.B. Aminoplastharze in untergeordneten Mengen, bezogen auf (B) in den erfindungsgemäßen härtbaren wäßrigen Bindemitteldispersionen mitverwendet werden.

Zur Herstellung der erfindungsgemäßen strahlungshärtbaren wäßrigen Überzugsmitteldispersionen wird die Komponente (B) in einem inerten organischen Lösungsmittel oder Lösungsmittelgemisch gelöst. Es kann auch die direkt von der Synthese her anfallende Lösung verwendet werden. Geeignete Lösungsmittel sind beispielsweise Tetrahydrofuran, Dioxan, Aceton, Methyläthylketon, Propanole, Butanole, Äthylacetat, Butylacetat, Methylenchlorid, Xylole oder Toluol; bevorzugt sind Methyläthylketon, Tetrahydrofuran, Isopropanol und Isobutanol.

Diese Lösung wird anschließend, gegebenenfalls nach Zugabe der Komponente (D) und eines Synergisten für die Komponente (D), mit einer wäßrigen Lösung des Dispergierhilfsmittels (C) versetzt. Aus der resultierenden Mischung wird das organische Lösungsmittel unter starkem Rühren unter Normaldruck oder im Vakuum, im allgemeinen als azeotropes Gemisch mit Wasser, destillativ entfernt. Die entstehenden wäßrigen Dispersionen weisen Feststoffgehalte von 20 bis 80 Gewichtsprozent auf. Der Restlösungsmittelgehalt liegt unter 0,1 Gewichtsprozent, bezogen auf die Gesamtmenge der wäßrigen Bindemitteldispersion.

In besonderen Fällen können die 100 %igen Präpolymeren, die eventuell bereits die Komponente (D) und Synergist enthalten, durch kräftiges Rühren auch direkt in Wasser, welches das Dispergierhilfsmittel (C) enthält, eingearbeitet werden.

Die gegebenenfalls mitzuverwendende Komponente (D) sowie die Hilfsstoffe können selbstverständlich auch unter Anwendung von in der Lacktechnologie üblichen Methoden nachträglich in die fertigen Dispersionen eingearbeitet werden.

Die fertigen Lacke können zur Erzielung optimaler Verarbeitungsviskosität mit Wasser, das eventuell weiteres Dispergierhilfsmittel (C) enthält, verdünnt werden.

De erfindungsgemäßen strahlungshärtbaren wäßrigen Überzugsmitteldispersionen zeichnen sich durch hohe Lagerstabilität aus. Sie sind praktisch frei von umweltschädigenden flüchtigen Bestandteilen und lassen sich mit gutem Erfolg als Beschichtungsmittel für nichtmetallische und metallische Substrate, z.B. für Leder, Kunststoffe, Papier, Holz, Glas, Keramik sowie metallische Untergründe einsetzen, wobei nichtmetallische Untergründe bevorzugt sind. Mit den erfindungsgemäßen strahlungshärtbaren wäßrigen Bindemitteldispersionen können in nur einem Arbeitsgang kochblasenfreie, hochglänzende, wasserfeste Beschichtungen von über 100 $\mu$m Dicke erhalten werden.

Die erfindungsgemäßen Bindemitteldispersionen lassen sich vorteilhaft auch zur Verstärkung von Faservliesen einsetzen.

Die Verarbeitung der erfindungsgemäßen strahlungshärtbaren wäßrigen Überzugsmittel erfolgt nach üblichen Methoden, wie durch Streichen, Rakeln, Spritzen, Walzen. Gießen oder Drucken. Zur Härtung werden die Überzuge im allgemeinen bis zu 30 min bei Temperaturen bis 100°C vorgeheizt und anschließend kurzzeitig einer UV- oder energiereichen Elektronenstrahlung ausgesetzt. Hierzu werden die üblicherweise für die Härtung von Überzügen eingesetzten UV- bzw. Elektronenstrahlungsquellen verwendet. Um die Vorheizzeiten möglichst gering zu halten, sind aus Viskositätsgründen relativ niedermolekulare Präpolymere bevorzugt.

Bei porösen Substraten, wie Beispielsweise Leder, Papier, Holz, sind nur sehr kurze Vorheizzeiten erforderlich, da die Hauptmenge des Wassers vom Untergrund aufgenommen wird; bisweilen kann auf ein Vorheizen ganz verzichtet werden.

Gegenüber konventionellen strahlungshärtbaren Beschichtungsmitteln weisen die erfindungsgemäßen Überzugsmittel u.a. auch den Vorteil auf, daß keine reaktiven Verdünner (Monomere) benötigt werden.

Die resultierenden hochglänzenden, dicken Überzüge sind frei von Oberflächenstörungen, beständig gegen Wasser sowie organische Lösungsmittel und weisen eine beachtliche Flexibilität, Kratz- und Knitterfestigkeit auf. Wie bei der Applikation als Klarlack deutlich wird, sind die erhaltenen Beschichtungen absolut trübungsfrei.

Als weitere Vorteile der erfindungsgemäßen Strahlungshärtbaren wäßrigen Bindemitteldispersionen sind ihre geringe Toxizität, ihre Umweltfreundlichkeit sowie ihre hohe Wirtschaftlichkeit zu erwähnen. Letzteres gilt insbesondere im Vergleich zu konventionellen Wasserlacken, die selbst zur Erzielung kockerfreier Schichtdicken von nur 60 $\mu$m komplizierte, zietraubende Aufheizprogramme, hohe Einbrenntemperaturen (teilweise bis 200°C) sowie lange Härtungszeiten (mitunter über 30 min) erfordern. Nichtmetallische organische Substrate, wie Leder, Papier oder Holz, scheiden für konventionelle Wasserlacke aus diesem Grunde ohnehin aus. Diese Untergründe erweisen sich für die erfindungsgemäßen strahlungshärtbaren wäßrigen Überzugsmittel als besonders vorteilhaft. Mit den erfindungsgemäßen Dispersionen können jedoch auch metallische Untergründe mit gutem Erfolg lackiert werden. Hier kommt in erster Linie ein Einsatz für coil-coating wegen der Ebenheit der Substrate, der kurzen Vorheizzeiten, insbesondere im Falle dünner Schichten, sowie der geringen Härtungszeit in Frage. Im Gegensatz zu konventionellen strahlungshärtbaren Lacken, die aufgrund ihres Monomerengehaltes toxikologisch bedenklich sein können, ist mit den erfindungsgemäßen strahlungshärtbaren wäßrigen Überzugsmitteln sogar ein Einsatz für die Beschichtung von Lebensmittelbehältern denkbar.

Folgende Beispiele sollen die vorliegende Erfindung näher charakterisieren, ohne diese einzuschränken. Die angegebenen Teile und Prozente beziehen sich, wenn nicht anders angegeben, auf das Gewicht.

Präpolymer 1

320 Teile eines Polyesters (aus Adipinsäure und Neopentylglykol, OH-Zahl: 210), 200 Teile Isophorondiisocyanat und 0,4 Teile Dibutylzinndilaurat werden auf 70°C erwärmt. Nach 2,5 Stunden werden 69,5 Teile 2-Hydroxyäthylacrylat zugegeben und die Mischung solange bei 70°C gerührt, bis alle Isocyanatgruppen umgesetzt sind. Das Reaktionsprodukt erstarrt beim Abkühlen auf Raumtemperatur.

Präpolymer 2

345 Teile eines Polyesters (aus Adipinsäure, Phthalsäure, Trimethylolpropan und Äthylenglykol; OH-Zahl: 325), 250 Teile Cyclohexan, 1,5 Teile konz. Schwefelsäure, 1,0 Teile Hydrochinon und 163 Teile Acrylsäure werden auf Siedetemperatur erhitzt. Das Reaktionswasser wird azeotrop entfernt. Nach ca. 8 Stunden werden das Cyclohexan und die überschüssige Acrylsäure durch Vakuumdestillation abgezogen. Es resultiert ein viskoses Harz mit einer Säurezahl von 7, es wird ohne weitere Aufarbeitung weiterverwendet.

Beispiel 1

a) Herstellung der Dispersion:

Zu 400 Teilen einer 75 %igen Lösung des Präpolymeren 1 in Methyläthylketon werden 3 Teile Benzildimethylketal und 6 Teile Benzophenon gegeben und unter Rühren gelöst. Anschließend werden bei 23°C innerhalb von 1 Stunde 150 Teile einer 10 %igen Lösung eines Copolymerisates aus 66 Teilen N-Vinylpyrrolidon und 34 Teilen Vinylpropionat unter Rühren zugetropft und die Mischung 1 Stunde nachgerührt. Bei einem Druck von 90—100 mbar und einer Innentemperatur von 40—45°C wird unter stufenweiser Zugabe von 200 Teilen Wasser das Methyläthylketon im azeotropen Gemisch mit Wasser destillativ entfernt. Anschließend wird die so erhalte Dispersion durch Zugabe von Wasser auf eine Auslaufzeit von 140 s im Fordbecher (DIN 4) eingestellt.
Feststoffgehalt 63 %.

b) Herstellung eines Überzuges:
20 Teile der Dispersion werden mit 0,4 Teilen Methyldiäthanolamin vermischt und in einer Schichtdicke von 100 μm auf eine Glasplatte aufgezogen. Die Probe wird 10 Minuten bei 70°C vorgeheizt und dann mit einer Geschwindigkeit von 5 m/min an einer Quecksilber-Hochdrucklampe (80 W/cm) in einem Abstand von 10 cm vorbeigeführt. Es resultiert ein trockener, hochglänzender und flexibler Lackfilm.

c) Faservliesverfestigung:
Ein Mischfaservlies (Wolle, Polyamidfaser, Baumwolle) wird im Tauchverfahren mit der unter a) beschriebenen auf 50 % Feststoffgehalt verdünnten Dispersion imprägniert und der Überschuß zwischen zwei Walzen abgequetscht. Nach dem Ablüften des Wassers wird mit einer Quecksilber-Hochdrucklampe (80 W/cm) gehärtet. Man erhält ein Vlies mit guten mechanischen Eigenschaften.

Beispiel 2
a) Herstellung der Dispersion:
Zu einer Mischung aus 126 Teilen Präpolymer 2 und 42 Teilen Isopropanol werden 84 Teile einer 15 %igen Lösung des Dispergierhilfsmittels gemäß Beispiel 1 zugetropft und die resultierende Dispersion durch zweistündiges Rühren homogenisiert. Bei stufenweiser Zugabe von 190 Teilen Wasser wird das Lösungsmittel zusammen mit Wasser (analog Beispiel 1) destillativ entfernt und die Dispersion anschließend durch Zugabe von Wasser auf eine Auslaufzeit von 130 s (Fordbecher DIN 4) eingestellt.
Feststoffgehalt: 44 %.

b) Herstellung eines Überzuges:
Die Dispersion wird in einer Schichtdicke von 200 μm auf Papier aufgezogen und die Probe 5 Minuten bei 70°C gehalten. Anschließend wird mit beschleunigten Elektronenstrahlen gehärtet (Strahlungsdosis: 3,04 Mrad). Es Resultiert ein klebfreier, hochglänzender und elastischer Film.

c) Faservliesverfestigung:
Ein Mischfaservlies wird, wie unter 1 c) beschrieben, mit der unter 2 a) beschriebenen Dispersion imprägniert und nach Ablüften des Wasser wie unter 2 b) gehärtet.

Beispiel 3
a) Herstellung der Dispersion
210 Teile eines Umsetzungsproduktes aus 1 Mol Bisphenol A-diglycidyläther und 2 Mol Acrylsäure (mittl. Molgewicht: 484; Viskosität nach DIN-Entwurf 53 788: 480 Pa.s bei 23°C) werden nacheinander mit 70 Teilen Methyläthylketon, 140 Teilen einer 15 %igen wäßrigen Lösung des Dispergierhilfsmittels nach Beispiel 1 und 105 Teilen einer 10 %igen wäßrigen Lösung eines Adduktes von 25 Mol Äthylenoxid an 1 Mol p-Isooctylphenol vermischt. Nach zweistündigem Rühren bei 23°C wird, wie unter Beispiel 1 beschrieben, unter stufenweise Zugabe von 140 Teilen Wasser das organische Lösungsmittel zusammen mit Wasser entfernt und anschließend die resultierende Dispersion mit Wasser auf eine Auslaufzeit im Fordbecher (DIN 4) von 170 s eingestellt.
Feststoffgehalt: 57 %.

b) Herstellung eines Überzuges
Die Dispersion wird in einer Schichtdicke von 200 μm auf eine Glasplatte aufgezogen und die Probe 10 min bei 80°C gehalten. Bei der anschließenden Härtung mit beschleunigten Elektronen (Dosis: 3,55 Mrad) wird ein klarer, hochglänzender, harter und kratzfester Film erhalten.

Beispiel 4
a) Herstellung eines pigmentierten Lackes
Aus 20 Teilen Präpolymer 2, 2,0 Teilen 2-Methylthioxanthon, 40 Teilen Rutil, 6,67 Teilen einer 30 %igen wäßrigen Lösung des Dispergierhilfsmittels gemäß Beispiel 1, 146,25 Teilen einer nach Beispiel 2 hergestellten Dispersion vom Feststoffgehalt 55 % wird durch zweistündiges Schütteln mit Porzellankugeln eine Pigmentpaste hergestellt.
Festgehalt: 65 %.

b) Herstellung eines Überzuges
Die Pigmentpaste wird in einer Schichtdicke von 80 μm auf Leder aufgezogen, 10 Minuten bei 70°C gehalten und anschließend mit einer Geschwindigkeit von 6 m/min an einer UV-Lampe (s. Beispiel 1) vorbeigeführt. Es resultiert ein hochglänzender, klebfreier und elastischer weißer Überzug.

Beispiel 5
a) Herstellung eines pigmentierten Lackes
Zu 259 Teilen einer Pigmentpaste aus 180 Teilen Präpolymer 2, 60 Teilen Isobutanol und 54 Teilen Kupferphthalocyanin werden innerhalb 45 Minuten 105,7 Teile einer 15 %igen wäßrigen Lösung des Dispergierhilfsmittels nach Beispiel 1 getropft; die resultierende Mischung wird 2,5 Stunden gerührt. Unter stufenweiser Zugabe von 200 Teilen Wasser wird das Lösungsmittel zusammen mit Wasser destillativ entfernt und anschließend die resultierende pigmentierte wäßrige Dispersion mit Wasser auf eine Auslaufzeit im Fordbecher (DIN 4) von 184 s verdünnt.

Festgehalt: 60 %.

b) Herstellung eines Überzuges

Die Dispersion wird in einer Schichtdicke von 150 μm auf eine Glasplatte aufgezogen, 10 min bei 70° gehalten und anschließend mit Elektronenstrahlen gehärtet (Dosis: 5,33 Mrad).

Es resultiert ein hochglänzender, harter blauer Lack-film.

**Patentansprüche**

1. Strahlungshärtbare wäßrige Bindemitteldispersion, dadurch gekennzeichnet, daß sie im wesentlichen besteht aus

(A) 20 bis 80 Gewichtsprozent Wasser,
(B) 80 bis 20 Gewichtsprozent mindestens eines in (A) dispergierten Präpolymeren mit einem Gehalt von 0,01 bis 1,0 Mol pro 100 g Präpolymer an polymerisierbaren C—C-Doppelbindungen, einem mittleren Molekulargewicht von mindestens 350 sowie einer Viskosität bei 23°C von mindestens 600 mPa.s,

mit der Maßgabe, daß die Summe der unter (A) und (B) genannten Prozentzahlen gleich 100 ist, sowie zusätzlich.

(C) 0,1 bis 30 Gewichtspozent, bezogen auf (B), Polyvinylpyrrolidon und/oder eines Vinylpyrrolidon-Vinylester-Copolymeren mit einem Vinylestergehalt von weniger als 35 Gewichtsprozent als Dispergierhilfsmittel und
(D) 0 bis 20 Gewichtsprozent, bezogen auf (B), mindestens eines Photoinitiators.

2. Bindemitteldispersion nach Anspruch 1, dadurch gekennzeichnet, daß die Komponente (B) ein polymerisierbare C—C-Doppelbindungen enthaltender Polyester mit einer Säurezahl von höchstens 10 ist.

3. Bindemitteldispersion nach Anspruch 1, dadurch gekennzeichnet, daß die Komponente (B) ein polymerisierbare C—C-Doppelbindungen enthaltender Polyäther ist.

4. Bindemitteldispersion nach Anspruch 1, dadurch gekennzeichnet, daß die Komponente (B) ein hydroxylgruppenhaltiges Umsetzungsprodukt aus einem mindestens zwei Epoxidgruppen pro Molekül enthaltenden Polyepoxid mit mindestens einer α,β-äthylenisch ungesättigten Carbonsäure ist.

5. Bindemitteldispersion nach Anspruch 1, dadurch gekennzeichnet, daß die Komponente (B) ein gegebenenfalls Harnstoffgruppen enthaltendes Polyurethan(meth)acrylat ist.

6. Bindemitteldispersion nach Anspruch 1, dadurch gekennzeichnet, daß die Komponente (B) ein polymerisierbare Doppelbindungen enthaltendes Polymeres ist, das durch Einführung von α,β-äthylenisch ungesättigten Acylresten in Acrylatcopolymere erhalten wird.

7. Verfahren zur Herstellung strahlungshärtbarer wäßriger Bindemitteldispersionen nach einem der vorhergehenden Ansprüche, dadurch gekennzeichnet, daß eine Lösung der Komponente (B) in einem inerten organischen Lösungsmittel oder Lösungsmittelgemisch mit einer wäßrigen Lösung der Komponente (C) gemischt und das inerte organische Lösungsmittel oder Lösungsmittelgemisch destillativ entfernt wird, wobei gegebenenfalls Komponente (D) und andere Hilfs- und Zusatzstoffe der Lösung der Komponente (B), deren Mischung mit der wäßrigen Lösung der Komponente (C) oder nach der destillativen Entfernung des inerten organischen Lösungsmittels oder Lösungsmittelgemisches zugefügt werden.

8. Verfahren zur Herstellung strahlungshärtbarer wäßriger Bindemitteldispersionen nach einem der Ansprüche 1 bis 6, dadurch gekennzeichnet, daß die 100% igen Präpolymeren (B), die gegebenenfalls Komponente (D) und Synergist enthalten, durch kräftiges Rühren direkt in Wasser, welches das Dispergierhilfsmittel (C) enthält, eingearbeitet werden.

9. Verwendung der strahlungshärtbaren wäßrigen Bindemitteldispersionen nach einem der Ansprüche 1 bis 6 für mittels UV-Strahlung oder beschleunigter Elektronen härtbare Überzugsmittel zur Beschichtung von metallischen und nichtmetallischen Substraten, wobei die Überzugsmittel gegebenenfalls zusätzlich Synergisten für die Komponente (D), Pigmente, Füllstoffe, lösliche Farbstoffe, weitere von Komponente (B) verschiedene Bindemittel und andere in der Lacktechnologie übliche Hilfsmittel enthalten.

10. Verwendung der strahlungshärtbaren wäßrigen Bindemitteldispersionen nach einem der Ansprüche 1 bis 6 zur Verstärkung von Faservliesen, wobei die Härtung des Bindemittels durch UV-Strahlung oder beschleunigte Elektronen erfolgt und die wäßrigen Bindemitteldispersionen gegebenenfalls zusätzlich Synergisten für die Komponenten (D) sowie gegebenenfalls weitere Hilfs- und Zusatzstoffe enthalten.

**Revendications**

1. Dispersion aqueuse de liant durcissable par rayonnement, caractérisée par le fait qu'elle est constituée essentiellement par:

(A) 20 à 80 % en poids d'eau,
(B) 80 à 20 % en poids d'au moins un prépolymère dispersé dans (A), d'une teneur de 0,01 à 1,0 mole pour 100 g de prépolymère en doubles liaisons C—C polymérisables, d'un poids moléculaire moyen d'au moins 350, ainsi que d'une viscosité, à 23°C, d'au moins 600 mPa.s,

sous réserve que la somme des pourcentages indiqués sous (A) et (B) soit égale à 100 ainsi qu'additionnelement, par

(C) 0,1 à 30% en poids, rapporté à (B) de polyvinylpyrrolidone et/ou d'un copolymère vinylpyrrolidone-vinyl-ester d'une teneur en vinylester d'au moins 35 % en poids en tant qu'agent auxiliaire de dispersion et
(D) 0 à 20 % en poids, rapporté à (B) d'au moins un photoinitiateur.

2. Dispersion de liant selon la revendication 1, caractérisée par le fait que le composant (B) est un polyester contenant des doubles liaisons C—C polymérisables, et d'indice d'acide d'au maximum 10.

3. Dispersion de liant selon la revendication 1, caractérisée par le fait que le composant (B) est un polyéther contenant des doubles liaisons C—C polymérisables.

4. Dispersion de liant selon la revendication 1, caractérisée par le fait que le composant (B) est un produit de réaction, à groupes hydroxyle, d'un polyépoxyde contenant au moins deux groupes époxy par molécule avec au moins un acide carboxylique insaturé éthyléniquement en α,β.

5. Dispersion de liant selon la revendication 1, caractérisée par le fait que le composant (B) est un (meth)acrylate de polyuréthane contenant éventuellement des groupes urée.

6. Dispersion de liant selon la revendication 1, caractérisée par le fait que le composant (B) est un polymère contenant des doubles liaisons polymérisables et qui est obtenu par introduction de restes acyle, à insaturation éthylénique en α, β, dans des copolymères d'acrylate.

7. Procédé de préparation de dispersions aqueuses de liant, durcissables par rayonnement, selon l'une des revendications précédentes, caractérisé par le fait qu'on mélange une solution du composant (B) dans un solvant, ou mélange de solvants, oranique, inerte, avec une solution aqueuse de composant (c) et l'on élimine le solvant ou mélange de solvants, organique, inerte, par distillation, avec addition éventuelle de composant (D) et autre auxiliaire et additif à la solution du composant (B), à son mélange avec la solution aqueuse du composant (C) ou après l'élimination par distillation du solvant, ou mélange de solvants, organique inerte.

8. Procédé de préparation de dispersions aqueuses de liant, durcissables par rayonnement, selon l'une des revendications 1 à 6, caractérisé par le fait que les prépolymères (B) à 100 %, qui contiennent éventuellement des composants (D) et du synergiste, sont incorporés, par agitation vigoureuse, directement dans l'eau qui contient l'auxiliaire de dispersion (C).

9. Utilisation des dispersions aqueuses de liant, durcissables par rayonnement selon l'une des revendications 1 à 6, pour agent de revêtement durcissable per rayonnement U—V ou électrons accélérés, en vue du revêtement de substrats métalliques et non métalliques, l'agent de revêtement contenant éventuellement, en plus, des synergistes pour le composant (D), des pigments, des charges, des colorants solubles, d'autres liants différents du composant (B) et d'autres auxiliaires usuels dans la technique des peintures.

10. Utilisation des dispersions aqueuses de liant, durcissables par rayonnement selon l'une des revendications 1 à 6, pour le renforcement de voiles de fibres, le durcissement du liant résultant de rayonnement UV ou d'électrons accélérés, et les dispersions aqueuses de liant contenant éventuellement en plus, des synergistes pour les composants (D) ainsi qu'éventuellement d'autres auxiliaires et additifs.

**Claims**

1. A radiation-curable aqueous binder dispersion, which essentially comprises

(A) from 20 to 80 percent by weight of water,
(B) from 80 to 20 percent by weight of one or more prepolymers which are dispersed in (A) and contain from 0.01 to 1.0 mole, per 100 g of prepolymer, of polymerizable carbon-carbon double bonds and have a mean molecular weight of not less than 350 and a viscosity, at $23^\circ$C, of not less than 600 mPa.s,

with the proviso that the sum of the percentages of (A) and (B) is 100, together with

(C) from 0.1 to 30 percent by weight, based on (B), of polyvinylpyrrolidone and/or a vinylpyrrolidone/vinyl ester copolymer having a vinyl ester content of less than 35 percent by weight, as dispersant, and
(D) from 0 to 20 percent by weight, based on (B), of one or more photoinitiators.

2. A binder dispersion as claimed in claim 1, wherein component (B) is a polyester which contains polymerizable carbon-carbon double bonds and has an acid number of at most 10.

3. A binder dispersion as claimed in claim 1, wherein component (B) is a polyether which contains polymerizable carbon-carbon double bonds.

4. A binder dispersion as claimed in claim 1, wherein component (B) is a hydroxyl-containing reaction product of a polyepoxide, containing two or more epoxide groups per molecule, with one or more $\alpha,\beta$-ethylenically unsaturated carboxylic acids.

5. A binder dispersion as claimed in claim 1, wherein component (B) is a polyurethane acrylate or methacrylate which may or may not contain urea groups.

6. A binder dispersion as claimed in claim 1, wherein component (B) is a polymer, containing polymerizable double bonds, which is obtained by introducing $\alpha,\beta$-ethylenically unsaturated acyl radicals into an acrylate copolymer.

7. A process for the preparation of a radiation-curable aqueous binder dispersion as claimed in any of the preceding claims, wherein a solution of component (B) is an inert organic solvent or solvent mixture is mixed with an aqueous solution of component (C) and the inert organic solvent or solvent mixture is removed by distillation, the component (D), if any, and other assistants and adjuvants being added to the solution of component (B), to its mixture with the aqueous solution of component (C) or to the mixture obtained after removing the inert organic solvent or solvent mixture by distillation.

8. A process for the preparation of a radiation-curable aqueous binder dispersion as claimed in any of claims 1 to 6, wherein the 100% strength prepolymer (B) optionally containing component (D) and a synergistic agent is incorporated directly into water containing the dispersant (C) by vigorous stirring.

9. Use of a radiation-curable aqueous binder dispersion as claimed in any of claims 1 to 6, for surface coatings, curable by means of UV radiation or accelerated electrons, for coating metallic and non-metallic substrates, it being possible for the surface coatings to additionally contain synergistic agents for component (D), pigments, fillers, soluble dyes, other binders, differing from component (B), and other assistants conventionally used in surface-coating technology.

10. Use of a radiation-curable aqueous binder dispersion as claimed in any of claims 1 to 6 for bonding fibrous webs, the curing of the binder being effected by UV radiation or accelerated electrons, and the aqueous binder dispersion optionally containing synergistic agents for component (D) and other optional assistants and adjuvants.